# EUROPEAN PATENT SPECIFICATION

(11) **EP 1 589 072 B1**
(45) Date of publication and mention of the grant of the patent: **01.06.2011**
(21) Application number: 05103212.6
(22) Date of filing: 21.04.2005
(51) Int. Cl.: C08L 95/00

(54) **Modified bituminous compositions and process for the preparation thereof**
Modifizierte bituminöse Zusammensetzungen und Verfahren zu deren Herstellung
Compositions bitumineuses modifiées et leur procédé de préparation

(30) Priority: 23.04.2004 IT MI20040799
(43) Date of publication of application: 26.10.2005
(73) Proprietor: ENI S.p.A., 00144 Rome (IT)
(72) Inventor: Canavesi, Elisabetta, 20124, Milan (IT); D'Elia, Luigi, 26025, Pandino (Cremona) (IT); Polacco, Giovanni, 56127, Pisa (IT); Biondi, Dario, 57125, Livorno (IT)
(74) Representative: Coletti, Raimondo

(56) References cited:
- EP-A- 0 658 603
- EP-A- 0 955 341
- US-A- 5 451 619

## Description

The present invention relates to modified bituminous compositions and the process for their preparation.

Bitumen is a mixture mainly consisting of aliphatic, aromatic and naphthene hydrocarbons, smaller quantities of acids and organic bases and hetero-cyclic compounds containing nitrogen and sulfur. It is a substance with colloidal characteristics, consisting of asphaltene micelles shielded by a stabilizing layer of polar resins dispersed in an oily phase. The chemical nature of the various phases cannot be univocally defined. For hundreds of years, bitumen was used as a binder and waterproofing agent in many applications. Among recent applications, road paving is probably the most important. Bitumen was initially obtained from natural deposits on the earth's surface and applied as such. Nowadays, bitumen and bituminous materials are produced starting from oil, mainly as a heavy residue of the vacuum distillation of crude oil.

Bitumen is a very appropriate material for the purposes of paving and waterproofing mentioned above, due to its properties and low cost, but according to the climate of the area, the temperature of the road paving can vary from a few tens of degrees centigrade below zero to over 60-70 degrees centigrade and it is often not possible to use bitumen as such as a result of its excessive fragility at low temperatures and poor consistency at high temperatures. In order to overcome these drawbacks and alter its rheological properties, various kinds of materials are therefore added to bitumens, among which polymeric materials and in particular thermoplastic elastomers. In this latter case, so-called polymer modified bitumens are obtained (PMB).

In order to be used as a modifying agent, a polymer must satisfy a wide number of requisites. Firstly, it must change the rheological properties of the bitumen, reducing its thermal susceptibility and increasing its mechanical and elastic properties. At the same time, however, the polymer must not cause an excessive increase in the viscosity of the bitumen in the molten state, so that, when operating, the conventional laying machines can be used without drawbacks.

Furthermore, the polymer must be sufficiently compatible with the asphalt so that the PMBs are not subject to phenomena of the phase separation during storage under heat. The polymer-bitumen mixture is unstable to storage under heat if, during a long residence time at high temperatures under static conditions, it tends to form a phase rich in polymer and a phase with a low polymer content, but rich in asphaltenes. Due to the difference in density, the former generally accumulates in the upper part of the storage container whereas the latter in the lower part. This leads to considerable problems relating to processability and lack of homogeneity of the end-product. Finally, the use of polymers must be convenient from an economical point of view, in the sense that the highest initial investment envisaged by their use, must be compensated by the possibility of obtaining better asphalt performances, but also by a reduction in the maintenance and re-asphalting costs, as well as, if possible, by the possibility of recycling the milled product at life-end.

Many types of polymeric materials have been used for producing PMB, each with its advantages and disadvantages depending on the physico-chemical characteristics. For example, polyolefins, such as polyethylene, polypropylene and their copolymers can be used for increasing the consistency of the bitumen; elastomers such as block styrene copolymers can be used for increasing the elastic recovery and viscosity at high temperatures. The most-widely used polymer at present is the styrene-butadiene-styrene (SBS) block thermoplastic elastomer, generally added in percentages varying from 3 to 8% by weight with respect to the bituminous phase depending on the bituminous base and performances required of the end-product. SIS (styrene-isoprene-styrene) and SB (styrene-butadiene), belonging to the same group of copolymers, are also used quite frequently. These copolymers are often capable of giving PMB stable to storage and convenient from an economical point of view.

SBS has a biphasic structure consisting of microdomains rich in polystyrene blocks interconnected by means of polybutadiene segments. At ordinary temperatures, the polystyrene domains are under their glass transition temperature (about 80°C), whereas the butadiene dispersing phase is in the rubber state, i.e. flexible and is that which allows the material to be significantly deformed. This leads to a cross-linking structure of the physical type which gives the polymers typical characteristics of elastic materials. When SBS comes in contact with the bitumen, at a high temperature, the latter makes the polymer "swell" and is distributed in its inside. The interactions between bitumen and SBS take place initially, preferably involving the flexible phase of the polymer, as this represents its matrix and also due to its greater free volume. It cannot be excluded, however, that the polystyrene domains also become swollen, mainly as a result of the diffusion in their inside, of aromatic components with a lower molecular weight present in the bitumen. The mixing process must be carried out in such a way as to mainly involve the most flexible, butadiene phase of the polymer, with the styrene domains only partially swollen and therefore still segregated and capable of exerting their function as knots of a three-dimensional lattice. In this way, the polymer, even if added in small quantities, can confer elastomeric properties to the whole system. It is consequently important for the modifications to be effected under non-excessive thermo-mechanical stress conditions so that the system can "memorize" the original structure of the polymer and therefore maintain the highest elasticity and hardness properties. These mixtures, however, are not always sufficiently "closely bound" as to preserve their structure at the storage temperature and in the absence of stirring. In other words, the necessary of forming a partial mixture leads to a thermodynamically unstable (or meta-stable) state which does not correspond to a minimum of energy and which spontaneously tends to evolve towards phase separation. These systems are therefore intrinsically bound to a risk situation relating to stability to storage, which is always the critical aspect for their use.

As the structure, and therefore the elastomeric properties of the polymer and modified bitumen, depend on a physical rather than chemical cross-linking, this can be destroyed either by the use of solvents, or by heating to temperatures higher than the glass transition temperature of the styrene domains. In both cases, the process is reversible and after evaporation of the solvent or cooling below the Tg, the material recovers its structure and original properties.

If, on the one hand, these polymers greatly improve the performances and duration of the bitumen, on the other, they unfortunately have the disadvantage of being sensitive to ultraviolet radiations and ozone, and can therefore reduce the resistance to aging of the bituminous conglomerate. In the case of SBS, but also SIS and SB, this problem is mainly due to the unsaturation present in the olefinic chains. This leads to the necessity of availing of a material which preserves the physical properties of these polymers, but which is less sensitive to UV radiations and ozone. The natural candidate for these requisites is SEBS (styrene-ethylene-butene-styrene) which is produced by the catalytic hydrogenation of C=C double bonds of SBS. With respect to SBS and analogous unsaturated rubbers, SEBS does in fact have a better resistance to UV and ozone, as well as to thermal cycles, and also has a lower permeability to humidity, fats and oils. The saturated nature of the aliphatic chain, however, creates a great limit to the compatibility of SEBS with bitumen and, other parameters such as molecular weight of the polymer and mixing conditions, being equal, SEBS is much less compatible with bitumen than SBS. The main problem in the use of a copolymer of the SEBS type for the modification of bitumens therefore consists in its poor miscibility with the latter.

Many attempts have been made to try and increase the compatibility of bitumen and modifying polymers, such as the addition of oils or low molecular weight polymers, or an attempt to promote the formation of a chemical bond between polymer and some of the bitumen molecules or cross-linking the polymer after mixing it with bitumen. The case of SEBS however seems to be particularly complex as, in spite of the great interest in this polymer on the part of the BMP field, both scientific and patent literature cite an extremely limited number of case in which bitumen is modified with SEBS to give a mixture which is sufficiently stable as to satisfy the specifications relating to storage. The fact that the market of bitumens modified with SEBS is still being developed, represents a further confirmation of this difficulty.

With respect to patent literature, there are some exceptions relating to patents filed by John Field in which bitumen is modified by the simple addition of SEBS copolymer. For example, US-A-5,973,037 discloses how to modify both oxidized and non-oxidized bitumens by the addition of SEBS in the form of pellets or powder by means of a simple mixing process with a high shear stress. US-A-5,929,144, filed by the same author, describes a completely analogous process, in which the modifying agent is a SEBS plasticized with 40% by weight of naphthene oil and the mixing can be effected with both a high and low shear stress. In any case, it should be pointed out that the success or failure of the mixing depends on a wide number of variables which can be basically summarized in three points: the characteristics of the polymer (composition, molecular weight, etc.), the mixing conditions (temperature, duration, equipment and procedures used) and finally, which is probably the most important, the characteristics of the bitumen (composition, origin, etc.) In this context, it should also be pointed out that it is almost never possible to establish a priori if a particular bitumen-polymer pair is compatible, specifically as a result of the variability of the composition of the bitumen. Consequently, compatibilizing techniques which have proved to be valid for a certain bitumen, may not necessarily be so for different bitumens.

With reference to the solubility parameters of the polymers and bitumens, however, it can be asserted that for most of the latter, compatibility with respect to SBS is higher than that with respect to SEBS.

The necessity therefore remains of finding as general as possible a method of use for improving the compatibility between bitumen and block copolymers of the SEBS type. Considering that mixing conditions and bitumen must obviously resort to machines and materials normally available in modification plants, the best method seems to be that of intervening on the polymer. As far as SEBS is concerned, the ratio between the styrene part and the butadiene part cannot be varied much in order to maintain the elastomeric properties based on the correct balance between these two components. Furthermore, the molecular weight cannot be reduced too much (it is a general rule that with an increase in the molecular weight, the compatibility between bitumen and polymer decreases), as the good physical characteristics of the final modified product could no longer be guaranteed. The most promising method therefore appears to be that of the chemical modification of the polymer, suitable for introducing functional groups into the chain, which are capable of increasing the polarity of the macromolecules and possibly also capable of reacting with other functional groups belonging to bitumen molecules (so as to establish chemical bonds with the latter) and/or belonging to the polymer itself (in order to produce a structure in which, in addition to physical cross-linking, there is also a chemical cross-linking). Copolymers of the SEBS type modified by means of the grafting of maleic anhydride, or the introduction of phthalic anhydride inside the macromolecule, are currently available on the market. These copolymers are also produced and commercialized for the modification of bitumens but, in certain cases, they can prove to be "too" compatible, which causes their dissolution in the bitumen itself, with a loss of the three-dimensional structure responsible for the elastic properties and a consequent reduction in the performances of the PMB obtained. US-A-5,246,987 describes the use of a block copolymer in which one of the blocks consists of halogenated vinylaromatic compounds and the other of olefinic chains, the latter preferably being halogenated. A similar philosophy is proposed in US-A-6,211,292 which suggests the use of a hydrogenated block elastomer, modified by means of the grafting of an alcohol, an acid or an amine subsequently reacted with an isocyanate. In both cases, the functionalization of the polymer requires the use of compounds which are difficult to handle and extremely complex and costly operations with respect to the plant.

It is therefore necessary to find a simple and economical functionalization method of SEBS, in order to increase its compatibility with bitumen to enable the production of modified bitumens suitable for road paving which are resistant to ozone, UV rays, thermal cycles and which also have a high elasticity, and high softening temperature.

In accordance with this, the present invention relates to a modified bituminous composition comprising:
(a) bitumen;
(b) block copolymers having the general formula (A-B)ₙ-A or (A-B)ₙ, A being a vinyl aromatic polymer block and B being a polymer block obtained by polymerization and subsequent hydrogenation of a conjugated diene, the above block copolymer being functionalized with one or more acrylates having general formula (I) 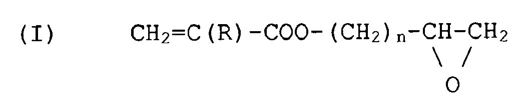
wherein R is selected from H and CH₃, n is an integer from 0 to 4.

The polymeric component (b) ranges from 0.5 to 30% by weight, preferably from 3 to 10% by weight with respect to the total of (a) + (b).

As far as the functionalization degree of the block polymer is concerned, compound (I) is present in the block copolymer in a quantity (the weight sum of the two being 100) from 0.2 to 4% by weight, preferably from 0.4 to 2% by weight.

Block copolymers suitable for being used for these modifications can have structures represented by the formulae A-B, A-B-A, A-B-A-B, B-A-B, B-A-B-A and the like, wherein A is a vinyl aromatic block polymer, whereas B is a polymer block obtained by the polymerization and subsequent hydrogenation of a conjugated diene. The term "selectively hydrogenated" refers to block copolymers in which there are practically no unsaturations of the olefinic type whereas unsaturations of the aromatic part are still present.

Among block copolymers, copolymers with 2 or 3 blocks are preferred. Examples of vinyl aromatic monomers which can be used for the preparation of block copolymers are styrene, o-methyl-styrene, p-methyl-styrene, p-terbutyl-styrene, preferably styrene. Examples of conjugated dienes which can be used are 1,3-butadiene, 2-methyl-1,3-butadiene (isoprene), 2,3-dimethyl-1,3-butadiene, 1,3-pentadiene, 1,3-hexadiene, 1,3-butadiene being preferred.

It is possible to use copolymers with a weight ratio between the styrene segments and hydrogenated butadiene segments ranging from 2/8 to 4/6, but said ratio is preferably about 3/7. The weight molecular weight of the copolymer can range from 10,000 to 1,000,000, but it preferably ranges from 30,000 to 500,000. Molecular weights lower than 30,000 necessitate the addition of high quantities of polymer to obtain significant effects on the properties of the bitumen, molecular weights higher than 500,000 create problems relating to the processability of the polymer and therefore of the mixture. The block copolymers which can be used for this invention can have a radial or linear configuration. The radial configuration is also known as star configuration and corresponds to chains having different branches, possibly differing in molecular weight and composition, which extend from a common central point, the number of branches varying from 3 to over 50, but they preferably have from 3 to 5.

As far as the compound having formula (I) is concerned, in the preferred embodiment, R is intended as CH₃ and n = 1; in this case the compound having general formula (I) is glycidyl methacrylate (GMA).

With respect to the grafting of the compound having general formula (I) to the block copolymer, this can be carried out either in solution or with the polymer in the molten state. The technique is described in scientific literature (M. Pracella, D. Chionna, 2003). In any case, the grafting mechanism is of the radicalic type and the reaction is consequently carried out in the presence of a radical initiator such as dicumyl peroxide. After mixing the polymer with the methacrylate having general formula (I) and with the radical initiator, the material is fed to a mixing chamber where the reaction takes place with the polymer in the molten state at a temperature generally ranging from 170 to 195°C. In order to limit the formation of undesired cross-linked structures, styrene (St) is added to the reaction mixture as comonomer. In order to limit the degradation of the polymer, the reaction is carried out with a contact time of a few minutes and in an inert nitrogen atmosphere.

The quantity of compound having general formula (I) effectively grafted to the SEBS copolymer is determined by means of infrared spectroscopic analysis effected on a film prepared with hot moulding (see the experimental part).

As far as the bituminous component of the present composition is concerned, this is selected from bitumens of the conventional type, i.e. containing asphaltenes which can be precipitated with n-heptane, asphaltenes which can be precipitated with n-pentane, resins, aromatic compounds, paraffins and naphthenes. These bitumens are characterized by penetration values generally ranging from 30 to 220 dmm and a softening point generally ranging from 35 to 55°C. The bitumen contained in the composition of the present invention is selected from distillation bitumens, oxidized bitumens, flushed bitumens, bitumens from visbreaking and bitumens obtained by the mixing of various components of an oil origin. Bitumens containing asphalt precipitated with propane from vacuum residues of crude oils and aromatic products, extracted with a solvent in refining processes (bitumen reconstructed from a lube cycle), are an example of the latter.

With respect to the ratio between the two components (a) and (b), the polymeric component (b) ranges from 0.5 to 30% by weight, preferably from 3 to 10% by weight with respect to the total of (a) + (b). Quantities lower than 0.5% negligibly change the rheological properties of the bitumen. The maximum quantity of polymer (30%) is, on the other hand, determinant mainly for economical reasons, but also for the processability of the bitumen.

The bituminous composition of the present invention can also include other ingredients such as organic and inorganic fillers, resins, oils and stabilizing products, as well as other polymers.

The bituminous composition of the present invention has the advantage of being particularly resistant to atmospheric agents and being stable to storage.

The present invention also relates to the process for the preparation of the modified bituminous composition described above which comprises reacting, at temperatures ranging from 160°C to 225°C and for a time ranging from 5 minutes to 3 hours, a bitumen with the block polymer (b) defined in claim 1.

At temperatures lower than 160°C, the high viscosity of the bitumen can limit the mixing with the polymer, at temperatures higher than 225°C, there is a high risk of evaporation of the most volatile components of the bitumen and the formation of degradation phenomena with respect to both the bitumen and the polymer. The mixing times preferably range from 5 minutes to 3 hours. For times shorter than 5 minutes, an adequate dispersion of the polymer in the bituminous phase cannot be guaranteed, whereas for times longer than 3 hours the same problems of evaporation and degradation due to the high temperatures can arise.

The mixing is effected using an immersion mixer of the rotor-stator type equipped with a disintegrating head as stator, the process typically takes place at rates ranging from 3000 to 6000 rpm i.e. under such conditions as to guarantee a high shear stress.

The modified bitumen prepared according to the process of the present invention is subjected to various characterizations, among which: penetration test (regulation EN1426), Ball and Ring softening test (regulation EN1427), stability to hot storage (regulation (EN13399), cold embrittlement temperature (EN12593), Brookfield viscosity (regulation ASTM D4402-87), morphological analysis with a fluorescence microscope (regulation prEN13632), ductility (regulation prEN3598/13703), elastic recovery (regulation prEN13398) and other characterizations envisaged by the American Superpave regulation. In some cases, samplings of material are taken during the modification to evaluate the evolution of the morphological characteristics of the mixture.

The penetration test allows the consistency of the modified bitumen to be determined, by measuring the depth, expressed as tenths of millimeter, at which a steel needle vertically penetrates a test sample of bitumen under certain load, time and temperature conditions. A container of normalized conditions is filled with bitumen, left to cool to room temperature and immersed in a distilled water bath. The supporting shaft of the needle is then lowered until its tip comes into contact with the surface of the bitumen and the shaft is freed allowing the needle, under a load of 100 g, to sink into the sample for 5 s. The penetration is assumed as being the average value of at least three measurements.

The Ball and Ring (BR) temperature measurement allows the softening point of a bitumen to be determined under heat. The bitumen is poured into two rings having standardized dimensions, which are placed on a support and immersed in a beaker containing distilled water at 5°C. Two spheres, also having standardized dimensions, are then loaded onto the rings and the bath is heated at a rate of 5°C/min. As the temperature increases, the bitumen becomes deformed under the weight of the spheres until it reaches a plate situated at 25.4 mm below the rings. The temperature of the bath, read at the moment in which the bitumen touches the plate, is the softening point.

The stability to hot storage test, also called "tuben test" verifies if, during preservation at a high temperature and in the absence of stirring, separation phenomena arise between the bituminous phase and the polymeric phase. An aluminum tube is filled with bitumen, still fluid, and is closed so that no air remains inside; it is then placed in an oven at 180° ± 1°C, in a vertical position, for 72 h ± 1h and subsequently cooled to -20°C. The sample is cut into three parts: the central part is discarded and the BR temperature of the bitumen contained in the upper (top) and lower (bottom) parts, is measured. If, during storage, phase separation has occurred, the upper part of the tube is richer in polymer with respect to the lower part. This difference can be detected with BR measurements and the modified bitumen is considered stable to storage if the BR temperatures of the top and bottom differ by at least 3°C.

The cold embrittlement temperature of the modified bitumen is evaluated by determining the Fraass breaking point. A weighed quantity of bitumen is spread on a harmonic steel plate having standardized dimensions, which is cooled at a rate of 1°C/min and periodically bent with a frequency of 1 Hz. The Fraass breaking point corresponds to the temperature at which cracking on the bitumen layer is observed.

The measurement of the dynamic viscosity of the ligand at high temperatures provides useful information on the processing and pumping phases. The Brookfield viscosity is determined by measuring the torque pair necessary for keeping the rotation rate constant, of a cylindrical spindle immersed in the sample of ligand maintained at a steady temperature. The viscosity of the test sample is directly linked to the pair requested.

The morphological analysis allows the mixing degree reached between the bituminous phase and the polymeric phase, to be evaluated. Samples of modified bitumen are observed by means of a fluorescence microscope and the images compared with standard reference images within the norm.

The ductility test is carried out on dog-bone-shaped samples of bitumen which are subjected to elongation of 5 cm/min, in a bath thermostat-regulated at 25°C. The ultimate elongation is defined as the ductility of the bitumen and this is often associated with information on the elastic recovery at 25°C of the two sample halves left to rest, expressed as percentage of the elongation of the test sample.

The "Superpave" regulation is based on rheological property measurements, compared with the performances predicted for ligands destined for road use. The bitumen is analyzed both as such, and after being subjected to artificial aging by means of the Rolling Thin Film Oven Test (RTFOT) to simulate the damage relating to the mixing phase with the aggregates.

The characteristics of all the tests are summarized hereunder.

The Rolling Thin Film Oven Test simulates the bitumen/aggregate mixing phase and consists in a treatment of the bitumen in an oven equipped with a rotating sample-holder plate at 163°C, in the presence of air, for 85 minutes.

A rheological measurement is effected, by means of a Dynamic Shear Rheometer (DSR), on a sample of bitumen subjected to shear stress in an oscillating regime, with a flat-plate geometry. With this test, the resistance is estimated, of the material to permanent deformation and wear breaking strength. The test is carried out with a plate having a diameter of 20 mm on the ligand as such and after RTFO. The minimum temperature is then sought for satisfying the following conditions:
G*/sen δ > 1.0 KPa for the ligand as such and G*/sen δ > 2.2 Kpa for the ligand subjected to RTFO (wherein G* is the complex modulus and δ the phase angle). The G*/sen δ ratio is also called "high temperature rigidity". Ligands working at temperatures at which they do not satisfy the above conditions may have problems of permanent deformation resistance.

The following examples are provided for a better understanding of the present invention.

### Examples

### Laboratory procedure for the preparation of modified bitumen

A measured quantity of bitumen is placed in a container and then in an oven at 180°C until it becomes fluid, it is then transferred to the housing of a thermo-jacket. At this point, the propeller of a mixer at high shear stress is immersed in the bitumen and the system is brought to the desired temperature, under modest stirring. Once this temperature has been reached, the polymer, in the form of powder or granules, is added in small quantities at a time, maintaining the system under vigorous stirring and at a constant temperature for the desired time. The tendency of the mixture to overheat is inhibited by means of a stream of cold air injected between the heating hood and the container for the whole duration of the modification. Again for the whole duration of the modification, a stream of nitrogen can be passed against the surface of the container to prevent the formation of oxidizing phenomena to which the bitumen and polymer may be subjected due to contact with air at a high temperature.

### EXAMPLE 1. Functionalization of the SEBS copolymer

A commercial SEBS copolymer, Kraton^{R} G 1652, having the following characteristics:
- three-block polymer of the linear type
- styrene content equal to 30% by weight with respect to the total
- viscosity in solution at 25% by weight in toluene at 25°C = 0.5 Pa s;
is functionalized with glycidyl methacrylate, effecting the reaction in the molten state in a Plasticorder Brabender mixer according to the following procedure:
- 39 g of Kraton^{R} G 1652 are mixed in a beaker with dicumyl peroxide, GMA and styrene;
- the Brabender mixing chamber is brought to the desired temperature and the rotors brought to 30 rpm, the polymer-monomer-initiator mixture is then charged using a suitable hopper. During the charging operations and subsequent reaction, the system is maintained under stirring and under a nitrogen stream;
- the reaction time is 6-7 minutes after which the rotors are stopped and the functionalized polymer is recovered.

After cooling the polymer, a part of it is purified by removing the non-reacted GMA. The material is dissolved in p-xylene and subsequently precipitated in a non-solvent such as methanol. Once the material thus precipitated has been dried in an oven at 100°C for 30 minutes, it is used for the preparation of a film by means of thermocompression moulding.

The quantity of GMA effectively grafted to the SEBS copolymer is determined by means of infrared spectroscopic analysis effected on film prepared with hot moulding. The grafting degree is determined by means of a calibration curve previously obtained by combining infrared analysis and titration of the epoxy groups effected in a solution of p-xylene by reacting the epoxy ring with an excess of trifluoroacetic acid, then reverse-titration with a solution of NaOH in methanol.

Table 1 indicates the operating conditions of the reactions with the relative grafting degrees obtained (the content of radicalic initiator is expressed as weight percentage with respect to the copolymer). The polymers from P1 to P14 of the above table were pulverized and mixed in relative percentages which were such as to obtain the mixtures 1T, 2T, 3T and 4T which contain 0.5, 0.75, 1 and 0.65% by weight of grafted GMA respectively.

**Table 1**

| Mark | T (°C) | Radicalic initiator % | Theoretical GMA (weight %) | GMA/St (mol./mol.) | Grafted GMA (weight %) |
|---|---|---|---|---|---|
| P1 | 195 | 0.2 | 6 | 1:1 | 0.67 |
| P2 | 170 | 0.2 | 6 | 1:1 | 0.5 |
| P3 | 195 | 0.25 | 7.5 | 1:1 | 1.25 |
| P4 | 195 | 0.25 | 7.5 | 1:1 | 1.15 |
| P5 | 195 | 0.25 | 7.5 | 1:1 | 1.5 |
| P6 | 195 | 0.2 | 6 | 1:1 | 1.05 |
| P7 | 195 | 0.2 | 6 | 1:1 | 1.25 |
| P8 | 195 | 0.2 | 6 | 1:1 | 1.25 |
| P9 | 170 | 0.2 | 6 | 1:1 | 0.66 |
| P10 | 170 | 0.2 | 6 | 1:1 | 0.7 |
| P11 | 170 | 0.2 | 6 | 1:1 | 0.46 |
| P12 | 170 | 0.2 | 6 | 1:1 | 0.5 |
| P13 | 170 | 0.2 | 6 | 1:1 | 0.47 |
| P14 | 170 | 0.2 | 6 | 1:1 | 0.93 |

### EXAMPLE 2

Production of modified bitumen starting from a vacuum distillation bitumen and having a penetration class of 70/100. The characteristics of the bitumen (indicated as bitumen A hereunder) are indicated in the following table.

| | |
|---|---|
| Penetration (dmm) | 97 |
| Softening point (°C) | 44 |
| Elastic recovery % | 7 |
| Viscosity at 135°C (mPa·s) | 283 |

Bitumen A is modified in 3 successive tests by the addition of polymers 1T, 2T and 3T respectively. In the three cases, the polymer is added in a quantity equal to 5.5% (from hereon the percentage quantities of polymer added should be intended as referring to the overall weight of the resulting mixture), according to the following operating conditions:

| | |
|---|---|
| mixing temperature | 225°C |
| mixing time | 2 hr |
| mixing rate | 4000 r.p.m. |

PMB having the following characteristics are obtained:

### Modified bitumens of example 2

| Bitumen modified at 5.5% | PMB1 | PMB2 | PBB3 |
|---|---|---|---|
| Starting bitumen | A | A | A |
| Polymer used | 1T | 2T | 3T |
| Penetration at 25°C (dmm) | 34 | 26 | 19 |
| Hot softening temperature (°C) | 71 | 74 | 71 |
| Top softening temperature (°C) | 69 | 66 | 69.5 |
| Bottom softening temperature (°C) | 70 | 65 | 70 |

which are therefore stable to hot storage both according to BR measurements and according to the morphological analysis effected on samples removed from the upper and lower part of the cylindrical container used for the tuben test. In addition to the stability obtained in the three cases, a progressive reduction in penetration is observed, in correspondence with an increase in the grafting degree of the modifying polymer (see the starting bitumen as a comparison).

### EXAMPLE 3

Bitumen A is modified in 2 successive tests by the addition of polymers 1T and 3T respectively. In the two cases, the polymer is added in a quantity equal to 5.5% according to the following operating conditions:

| | |
|---|---|
| mixing temperature | 190°C |
| mixing time | 2 hr |
| mixing rate | 4000 r.p.m. |

PMB having the following characteristics are obtained:

### Modified bitumens of example 3

| Bitumen modified at 5.5% | PMB4 | PMB5 |
|---|---|---|
| Starting bitumen | A | A |
| Polymer used | 1T | 3T |
| Penetration at 25°C (dmm) | 34 | 33 |
| Hot softening temperature (°C) | 70.5 | 70 |
| Top softening temperature (°C) | 71 | 70.5 |
| Bottom softening temperature (°C) | 70.5 | 70.5 |

The two modified bitumens are therefore stable to hot storage both according to BR measurements and according to the morphological analysis effected on samples removed from the upper and lower part of the cylindrical container used for the tuben test. Mixtures are consequently obtained, which are also stable under blander conditions (mixing temperature equal to 190°C) with respect to those of Example 2. PMB4 and PMB5 have analogous characteristics to the PMB described in Example 2.

### EXAMPLE 4

Bitumen A is modified in 3 successive tests by the addition of the polymer 1T in a quantity equal to 5.0, 4.0 and 3.0 % respectively according to the following operating conditions:

| | |
|---|---|
| mixing temperature | 190°C |
| mixing time | 2 hr |
| mixing rate | 4000 r.p.m. |

BMP having the following characteristics are obtained:

### Modified bitumens of example 4

| Bitumen modified | PMB6 | PMB7 | PMB8 |
|---|---|---|---|
| Starting bitumen | A | A | A |
| Quantity of 1T polymer | 5.0 | 4.0 | 3.0 |
| Penetration at 25°C (dmm) | 38 | 44 | 55 |
| Hot softening temperature (°C) | 69 | 52.5 | 51 |
| Top softening temperature (°C) | 70 | 51 | 50 |
| Bottom softening temperature (°C) | 69.5 | 51.5 | 49.5 |

The PMB 6-8 are therefore stable to hot storage both according to BR measurements and according to the morphological analysis effected on samples removed from the upper and lower part of the cylindrical container used for the tuben test. Stable mixtures are consequently obtained for different quantities of polymer added (from 3 to 5%).

### EXAMPLE 5

Bitumen A is modified in 3 successive tests by the addition of the polymer 4T in a quantity equal to 5.5, 4.0 and 3.0 % respectively according to the following operating conditions:

| | |
|---|---|
| mixing temperature | 180°C |
| mixing time | 30 min |
| mixing rate | 4000 r.p.m. |

PMB having the following characteristics are obtained:

### Modified bitumens of example 5

| Bitumen modified | PMB9 | PMB10 | PMB11 |
|---|---|---|---|
| Starting bitumen | A | A | A |
| Quantity of 4T polymer | 5.5 | 4.0 | 3.0 |
| Penetration at 25°C (dmm) | 43 | 45 | 53 |
| Hot softening temperature (°C) | 71 | 58 | 48 |
| Top softening temperature (°C) | 70 | 61 | 51 |
| Bottom softening temperature (°C) | 70 | 61 | 49 |

BMP 9-11 are therefore stable to hot storage both according to BR measurements and according to the morphological analysis effected on samples removed from the upper and lower part of the cylindrical container used for the tuben test.

### COMPARATIVE EXAMPLE 6

Bitumen A is modified in 2 successive tests by the addition of Kraton^{R} G1652 in a quantity equal to 5.5%, at a mixing temperature of 225 and 250°C respectively, according to the following operating conditions:

| | |
|---|---|
| mixing time | 1 hr |
| mixing rate | 4000 r.p.m. |

PMB having the following characteristics are obtained:

### Modified bitumens of comparative example 6

| Bitumen modified | PMB12 | PMB13 |
|---|---|---|
| Starting bitumen | A | A |
| Quantity of Kraton^{R} G1652 polymer | 5.5 | 5.5 |
| Mixing temperature (°C) | 225 | 250 |
| Hot softening temperature (°C) | 77 | 74 |

PMB 12-13 prove to be greatly unstable to hot storage as demonstrated by the values indicated in the following table and also by microscopic analysis which shows a strong bitumen-polymer separation phase.

### Stability to storage of PMB12 and PMB13

| Bitumen modified | PMB12 | | PMB13 | |
|---|---|---|---|---|
| Mixing temperature (°C) | 225 | | 250 | |
| Tuben test | top | bottom | top | bottom |
| Hot softening temperature (°C) | 80 | 65 | 81 | 66 |

The example shows how the non-modified polymer is incompatible with bitumen A even if mixed under high temperature conditions.

### COMPARATIVE EXAMPLE 7

Bitumen A is modified by the addition of Kraton^{R} FG 1901 X. Kraton^{R} FG 1901 X is a SEBS functionalized by the grafting of maleic anhydride for a quantity equivalent to 2% by weight. The characteristics of the polymer are as follows:
- three-block linear polymer of the linear type;
- styrene content equal to 30% by weight with respect to the total;
- viscosity in solution at 25% by weight in toluene at 25°C = 1 Pa s.

2 successive tests are carried out, adding Kraton^{R} FG 1901 X in a quantity equal to 5.5%, at a mixing temperature of 225 and 200°C respectively, according to the following operating conditions:

| | |
|---|---|
| mixing time | 1 hr |
| mixing rate | 3000 r.p.m. |

PMB having the following characteristics are obtained:

### Modified bitumens of comparative example 7

| Bitumen modified | PMB14 | PMB15 |
|---|---|---|
| Starting bitumen | A | A |
| Quantity of Kraton^{R} FG 1901 X polymer | 5.5 | 5.5 |
| Mixing temperature (°C) | 225 | 200 |
| Hot softening temperature (°C) | 52 | 51 |

The bitumens modified PMB 14-15 prove to be stable to hot storage both according to BR measurements and according to the morphological analysis effected on samples removed from the upper and lower part of the cylindrical container used for the tuben test. It is observed that functionalization with maleic anhydride in this case causes stability of the mixture but, unlike the previous examples, it produces PMB in which the hot softening temperature is only a few degrees centigrade higher than that of the non-modified bitumen.

### EXAMPLE 8

Bitumen A is modified by the addition of the polymer 4T in a quantity equal to 5.5%. The operating conditions are the following:

| | |
|---|---|
| mixing temperature | 180°C |
| mixing time | 2 hr |
| mixing rate | 4000 r.p.m. |

PMB 16 is obtained, having the following characteristics:

| | |
|---|---|
| Penetration at 25°C | 42 dmm |
| Hot softening temperature | 71 °C |
| Top softening temperature | 70 °C |
| Bottom softening temperature | 70 °C |

The modified bitumen PMB16 is therefore stable to hot storage both according to BR measurements and according to the morphological analysis effected on samples removed from the upper and lower part of the cylindrical container used for the tuben test.

### COMPARATIVE EXAMPLE 9

Bitumen A is modified by the addition of the polymer SBS-r in a quantity equal to 5.5%. The operating conditions are the following:

| | |
|---|---|
| mixing temperature | 200°C |
| mixing time | 3 hr |
| mixing rate | 3000 r.p.m. |

PMB 17 is obtained, having the following characteristics:

| | |
|---|---|
| Penetration at 25°C | 53 dmm |
| Hot softening temperature | 87 °C |
| Top softening temperature | 95 °C |
| Bottom softening temperature | 54 °C |

The modified bitumen PMB17 is therefore unstable to hot storage both according to BR measurements and according to the morphological analysis effected on samples removed from the upper and lower part of the cylindrical container used for the tuben test.

### EXAMPLE 10

PMB 16 is subjected to characterizations according to the Superpave regulation and compared with a PMB (indicated hereunder as PMB18) prepared with SBS and the same bitumen according to a procedure which guarantees its stabilization.
PMB18 is obtained from a 70/100 base by the addition of SBS-r, 5.5% by weight;

| | |
|---|---|
| Penetration at 25°C | 59 dmm |
| Softening temperature | 88 °C |

Table 2 indicates the results of said characterizations.

**Table 2**

| Initial properties | PMB 16 | PMB 18 comparative |
|---|---|---|
| Penetration at 25°C, 100 g, 5 s, [dmm] | 41 | 59 |
| Softening point [°C] | 73 | 88 |
| Elastic recovery % (20 cm, 10°C, OB) | 77 | 75 |
| Elastic recovery % (20 cm, 25°C) | 92 | 77 |
| Viscosity at 135°C [mPa.s] (20 rpm) | 1230 | 2174 |
| DSR [G*/sin δ] [min 1.0 kPa] [kPa] | 1.092 | 1.024 |
| Temperature [°C] | 81.0 | 82.0 |
| | | |
| Properties after RTFOT | | |
| RTFOT weight variation [%] | -0.09 | 0.00 |
| DSR [G*/sin δ] [min 2.20 kPa] [kPa] | 2.256 | 2.310 |
| Temperature [°C] | 74.0 | 71.0 |

After RTFOT, due to the evaporation of the most volatile compounds and degradation phenomena to which the polymer is subjected, the temperature which satisfies the DSR conditions undergoes a decrease in both PMB. In particular, said temperature decreases by 7°C and 11°C for PMB16 and PMB18 respectively. This means that, with the same percentage of polymer contained, the PMB obtained with SBS undergoes a more distinct reduction with respect to that obtained with grafted SEBS. The latter is therefore better at high temperatures.

## Claims

1. A modified bituminous composition comprising:
(a) bitumen;
(b) block copolymers having the general formula (A-B)ₙ-A or (A-B)ₙ, A being a vinyl aromatic polymer block and B being a polymer block obtained by polymerization and subsequent hydrogenation of a conjugated diene, the above block copolymer being functionalized with one or more acrylates having general formula (I) 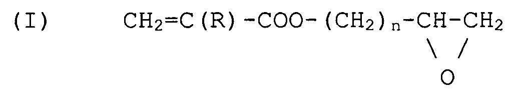 wherein R is selected from H and CH₃, n is an integer from 0 to 4, said block copolymer being functionalized with a quantity of compound having general formula (I) ranging from 0.2% to 4% by weight, said polymeric component (b) being present in a quantity ranging from 0.5% to 30% by weight with respect to the total of (a) + (b).

2. The modified bituminous composition according to claim 1, wherein R=CH₃ and n=1.

3. The modified bituminous composition according to claim 1, wherein A is a polystyrene block and B is a polymer block obtained by the polymerization and subsequent hydrogenation of 1,3-butadiene.

4. The modified bituminous composition according to claim 1, wherein the weight molecular weight of the polymer (b) ranges from 10,000 to 1,000,000.

5. The modified bituminous composition according to claim 4, wherein the weight molecular weight of the polymer (b) ranges from 30,000 to 500,000.

6. The bituminous composition according to claim 1, wherein the block copolymer is functionalized with a quantity of compound having general formula (I) ranging from 0.4 to 2% by weight.

7. The bituminous composition according to claim 1, wherein the polymeric component (b) ranges from 3 to 10% by weight with respect to the total of (a) + (b).

8. Bitumen and polymer mixtures according to claim 1, which can be used as ligands for road conglomerates, for waterproofing membranes and in the field of bituminous emulsions.

9. A process for the preparation of bitumen and polymer mixtures, according to claims 1 to 7, **characterized in that** the bitumen (a) is reacted at a temperature ranging from 160° to 225°C, for a time ranging from 5 minutes to 3 hours, with the block copolymer (b), the polymeric component (b) being present in a quantity ranging from 0.5 to 30% by weight with respect to the total of (a) + (b).

## Patentansprüche

1. Modifizierte bituminöse Zusammensetzung enthaltend:
(a) Bitumen,
(b) Blockcopolymere mit der allgemeinen Formel (A-B)ₙ-A oder (A-B)ₙ, worin A ein Block aus vinylaromatischem Polymer und B ein Polymerblock, welcher durch die Polymerisation und nachfolgende Hydrierung eines konjugierten Diens erhalten worden ist, ist, wobei das vorgenannte Blockcopolymer mit einem oder mehreren Acrylaten mit der allgemeinen Formel (I) 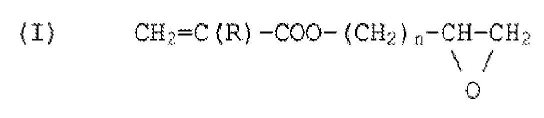 funktionalisiert ist, worin R aus H und CH₃ ausgewählt ist, n eine ganze Zahl zwischen 0 und 4 ist, wobei das Blockcopolymer mit der Verbindung mit der allgemeinen Formel (I) in einer Menge in einem Bereich zwischen 0,2 % und 4 Gew.-% funktionalisiert ist, wobei die Polymerkomponente (b) in einer Menge zwischen 0,5 % und 30 Gew.-% bezogen auf die Summe von (a) + (b) vorliegt.

2. Modifizierte bituminöse Zusammensetzung nach Anspruch 1, worin R=CH₃ und n=1 ist.

3. Modifizierte bituminöse Zusammensetzung nach Anspruch 1, wobei A ein Polystyrolblock ist und B ein Polymerblock ist, welcher durch die Polymerisation und nachfolgende Hydrierung von 1,3-Butadien erhalten worden ist.

4. Modifizierte bituminöse Zusammensetzung nach Anspruch 1, wobei das Molekulargewicht des Polymers (b) in einem Bereich zwischen 10.000 und 1.000.000 liegt.

5. Modifizierte bituminöse Zusammensetzung nach Anspruch 4, wobei das Molekulargewicht des Polymers (b) in einem Bereich zwischen 30.000 und 500.000 liegt.

6. Bituminöse Zusammensetzung nach Anspruch 1, wobei das Blockcopolymer mit der Verbindung mit der allgemeinen Formel (I) in einer Menge in einem Bereich zwischen 0,4 und 2 Gew.-% funktionalisiert ist.

7. Bituminöse Zusammensetzung nach Anspruch 1, wobei die Polymerkomponente (b) in einer Menge in einem Bereich zwischen 3 und 10 Gew.-% bezogen auf die Summe von (a) + (b) vorliegt.

8. Bitumen und Polymermischungen nach Anspruch 1, welche als Liganden für Straßengemische, für Wasserabdichtungsmembranen und auf dem Gebiet der bituminösen Emulsionen eingesetzt werden können.

9. Verfahren zur Herstellung von Bitumen und Polymermischungen nach einem der Ansprüche 1 bis 7, **dadurch gekennzeichnet, dass** das Bitumen (a) bei einer Temperatur in einem Bereich zwischen 160°C und 225°C für eine Zeit zwischen 5 Minuten und 3 Stunden mit dem Blockcopolymer (b) reagiert wird, wobei die Polymerkomponente (b) in einer Menge in einem Bereich zwischen 0,5 und 30 Gew.-% bezogen auf die Summe von (a) + (b) vorliegt.

## Revendications

1. Composition bitumineuse modifiée, comprenant :
a) un bitume ;
b) des copolymères à blocs de formule générale (A-B)ₙ-A ou (A-B)ₙ, où A représente un bloc polymère de composé vinyl-aromatique et B représente un bloc polymère obtenu par polymérisation d'un diène conjugué et hydrogénation ultérieure, lequel copolymère à blocs est fonctionnalisé au moyen d'un ou plusieurs acrylate(s) de formule générale (I) : 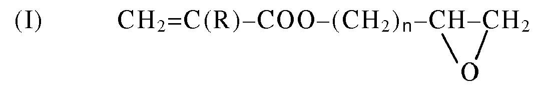 dans laquelle R représente un atome d'hydrogène H ou un groupe méthyle CH₃, et l'indice n est un nombre entier valant de 0 à 4,
et lequel copolymère à blocs est fonctionnalisé à l'aide de 0,2 à 4 % en poids de composé(s) de formule générale (I),
ledit composant polymère (b) se trouvant présent en une quantité représentant de 0,5 à 30 % du poids total des composants (a) et (b).

2. Composition bitumineuse modifiée, conforme à la revendication 1, dans laquelle R représente un groupe méthyle CH₃, et l'indice n vaut 1.

3. Composition bitumineuse modifiée, conforme à la revendication 1, dans laquelle A représente un bloc polystyrène et B représente un bloc polymère obtenu par polymérisation de buta-1,3-diène et hydrogénation ultérieure.

4. Composition bitumineuse modifiée, conforme à la revendication 1, dans laquelle la masse molaire moyenne en poids du polymère (b) vaut de 10 000 à 1 000 000.

5. Composition bitumineuse modifiée, conforme à la revendication 4, dans laquelle la masse molaire moyenne en poids du polymère (b) vaut de 30 000 à 500 000.

6. Composition bitumineuse modifiée, conforme à la revendication 1, dans laquelle le copolymère à blocs est fonctionnalisé à l'aide de 0,4 à 2 % en poids de composé(s) de formule générale (I).

7. Composition bitumineuse modifiée, conforme à la revendication 1, dans laquelle le composant polymère (b) se trouve présent en une quantité représentant de 3 à 10 % du poids total des composants (a) et (b).

8. Mélanges de bitume et de polymères, conformes à la revendication 1, que l'on peut employer comme liants de conglomérats pour revêtement routier, dans des membranes d'imperméabilisation à l'eau et dans le domaine des émulsions bitumineuses.

9. Procédé de préparation de mélanges de bitume et de polymères conformes aux revendications 1 à 7, **caractérisé en ce que** l'on fait réagir le bitume (a), à une température de 160 à 225 °C et durant un laps de temps de 5 minutes à 3 heures, avec le copolymère à blocs (b), ledit composant polymère (b) se trouvant présent en une quantité représentant de 0,5 à 30 % du poids total des composants (a) et (b).
